# EUROPÄISCHE PATENTSCHRIFT

(11) **EP 1 407 293 B1**
(45) Veröffentlichungstag und Bekanntmachung des Hinweises auf die Patenterteilung: **13.08.2008**
(21) Anmeldenummer: 02747341.2
(22) Anmeldetag: 03.06.2002
(51) Int. Cl.: G01S 17/93

(54) **ERFASSUNGSVERFAHREN UND -VORRICHTUNG**
SENSING METHOD AND DEVICE
PROCEDE ET DISPOSITIF D'ACQUISITION

(30) Priorität: 05.06.2001 DE 10127204
(43) Veröffentlichungstag der Anmeldung: 14.04.2004
(73) Patentinhaber: IBEO Automobile Sensor GmbH, 22179 Hamburg (DE)
(72) Erfinder: WILLHOEFT, Volker, 22303 Hamburg (DE); LAGES, Ulrich, 21031 Hamburg (DE)
(74) Vertreter: Manitz, Finsterwald & Partner GbR
(86) Internationale Anmeldenummer: PCT/EP2002/006057
(87) Internationale Veröffentlichungsnummer: WO 2002/099458

(56) Entgegenhaltungen:
- DE-A- 3 322 528
- DE-A- 19 530 281
- DE-A- 19 728 626
- DE-U- 29 620 357
- EWALD A. ET AL: 'Laser scanners for obstacle detection in automotive applications' XP010529017

## Beschreibung

Die Erfindung betrifft ein Verfahren und eine Vorrichtung zur optischen Erfassung der Umgebung eines Fahrzeugs mit wenigstens einer am Fahrzeug angebrachten optoelektronischen Sende-/Empfangseinrichtung gemäß dem Oberbegriff des Anspruchs 1 bzw-15. Dies ist aus DE 195 30 281 A1 und dem paper "Laser Scanners for Obstacle Delection in Automotive Applications", Proceeding of the IEEE Indelligent vehicles Symposiun 2000 (3.-5 obtober 2000), ISBN O-7803-6363-9, behannt.

Derartige optoelektronische Sende-/Empfangseinrichtungen, die im folgenden auch einfach als Sensoren bezeichnet werden, besitzen ein Sichtfeld, das zur Erfassung oder Überwachung der Fahrzeugumgebung abgetastet wird. Lediglich in diesem Sichtfeld liegende Gegenstände oder Bewegungen können von dem Sensor erfasst werden.

Aufgabe der Erfindung ist es, eine Möglichkeit zu schaffen, eine an einem Fahrzeug angebrachte optoelektronische Sende-/Empfangseinrichtung möglichst vielseitig einzusetzen, wobei der Aufwand hierfür möglichst gering sein soll.

Die Lösung dieser Aufgabe erfolgt zum einen durch die Merkmale des unabhängigen VerfahRensanspruchs 1

Erfindungsgemäß wird mit der Strahlungsablenkeinrichtung, die im folgenden auch einfach als Spiegeleinrichtung bezeichnet wird, das Sichtfeld der Sende-/Empfangseinrichtung bzw. des Sensors teilweise abgelenkt oder umgelenkt. Der Sensor kann so auch in Richtungen "blicken", die außerhalb seines eigentlichen Sichtfeldes liegen. Auf diese Weise kann der mit dem Sensor einsehbare Überwachungs- oder Erfassungsbereich erweitert werden. Die Erfindung eröffnet hierdurch mannigfaltige zusätzliche Anwendungsmöglichkeiten. Ein Vorteil der Erfindung besteht insbesondere darin, dass zusätzliche Sensoren bzw. zusätzliche Sende-/Empfangseinrichtungen nicht erforderlich sind.

Bei der Ablenk- bzw. Spiegeleinrichtung kann es sich um eine Anordnung mit einer oder mehreren Spiegelflächen handeln. Es können auch mehrere separate Anordnungen verwendet werden, die jeweils eine oder mehrere Spiegelflächen aufweisen.

Prinzipiell ist es erfindungsgemäß möglich, als optoelektronische Sende-/Empfangseinrichtung bzw. Sensor eine Kamera, z.B. eine Videokamera, vorzusehen, mit der die Abtastung des Sichtfeldes dadurch erfolgt, dass Bilder des Sichtfeldes aufgenommen und anschließend ausgewertet werden.

Besonders bevorzugt allerdings ist es gemäß einer praktischen Ausführungsform der Erfindung, als optoelektronischen Sensor einen Laserscanner zu verwenden. Dabei handelt es sich vorzugsweise um einen Laserscanner, der in wenigstens einer Abtastebene einen Laserstrahl aussendet und mit diesem Abtaststrahl wiederholend einen vorgegebenen, grundsätzlich beliebigen Winkelbereich von bis zu 360° überstreicht. Die Entfernung zu den die ausgesandten Abtaststrahlen reflektierenden Objekten wird dabei vorzugsweise nach dem Lichtlaufzeitverfahren bestimmt. Die Abtaststrahlung kann sowohl im für das menschliche Auge sichtbaren Wellenlängenbereich als auch außerhalb dieses Bereiches liegen. Bevorzugt wird ein Laserscanner verwendet, der zu jedem Entfernungswert einen auf eine vorgegebene Achse des Scanners bezogenen Winkelwert liefert. Es kann sich bei dem Sensor prinzipiell auch um ein Laserentfernungsmessgerät ohne Abtastbewegungen ausführenden Abtaststrahl handeln. Ein derartiges Gerät wird auch als Fixed-Beam-Lasertaster bezeichnet.

Bei den Fahrzeugen kann es sich grundsätzlich um beliebige, auch selbstfahrende Fahrzeuge handeln, wobei bevorzugt die Erfindung in Verbindung mit PKWs und LKWs eingesetzt wird.

Die Region von besonderem Interesse, die im folgenden auch als "Region Of Interest" (ROI) bezeichnet wird, ist z.B. ein außerhalb des Überwachungsbereiches gelegener Bereich. Hierbei wird folglich ein von der Spiegeleinrichtung eingenommener Teil des Sichtfeldes des Sensors durch eine außerhalb des Sichtfeldes liegende Region der Fahrzeugumgebung ersetzt, in die der Sensor ohne die Strahlungsablenkeinrichtung nicht "blicken" könnte.

Alternativ oder zusätzlich ist es erfindungsgemäß auch möglich, dass als ROI zumindest ein Teil des Überwachungsbereiches gewählt wird. Hierbei wird folglich ein Teil des im Sichtfeld des Sensors liegenden Überwachungsbereiches mehrfach abgetastet, nämlich einmal bei der "normalen" oder "direkten" Abtastung des Sichtfeldes und wenigstens ein weiteres Mal über die Spiegeleinrichtung. Die Spiegeleinrichtung weist hierbei zur Strahlungsablenkung vorzugsweise mehrere Einzelspiegel oder einzelne Spiegelflächen auf.

Durch die mit der Erfindung mögliche Mehrfachabtastung zumindest eines Teils des Überwachungsbereiches kann eine bestimmte Region von besonderem Interesse genauer untersucht werden als mit nur einer Einzelabtastung. Die Erfindung ermöglicht so eine intensivere Betrachtung der jeweiligen ROI.

Wenn beispielsweise bei Verwendung eines Laserscanners das einen bestimmten Winkelbereich von z.B. 360°, 270°, 180° oder 90° umfassende Sichtfeld des Sensors von einem ausgesandten Abtastlichtstrahl wiederholt überstrichen wird, dann wird pro Abtastung des Sichtfeldes der der ROI entsprechende Teil des Überwachungsbereiches wenigstens zweimal abgetastet. In Abhängigkeit von der Ausgestaltung der Spiegeleinrichtung kann pro Einzelabtastung des Sichtfeldes die ROI im Prinzip beliebig oft abgetastet werden.

Des weiteren kann durch entsprechende Ausgestaltung der Spiegeleinrichtung vorgesehen sein, dass die Mehrfachabtastung aus unterschiedlichen Richtungen erfolgt. Eine ROI kann dadurch gewissermaßen unter verschiedenen Blickwinkeln betrachtet werden, wodurch zusätzliche Informationen über die ROI gewonnen werden können.

Gemäß einer weiteren bevorzugten Ausgestaltung der Erfindung kann bei einer Abtastung des Sichtfeldes des Sensors zumindest ein Teil des Sichtfeldes, insbesondere des Überwachungsbereiches, über die Spiegeleinrichtung in mehreren verschiedenen Abtastebenen abgetastet werden. Hierdurch kann beispielsweise eine mehrzeilige Abtastung der ROI realisiert werden.

Auch bei einer Abtastung in mehreren verschiedenen Abtastebenen kann die Abtastung durch entsprechende Ausführung der Spiegeleinrichtung aus unterschiedlichen Richtungen erfolgen.

In einer weiteren Variante der Erfindung ist vorgesehen, dass mehrere hintereinander angeordnete Spiegeleinrichtungen verwendet werden.

Gemäß der Erfindung ist vorgesehen, dass die Stellung der Spiegeleinrichtung verändert wird. Hierdurch kann die ROI im Sichtfeld des Sensors verschoben werden, wodurch sich weitere vorteilhafte Anwendungsmöglichkeiten eröffnen.

Bei Verwendung von mehreren hintereinander angeordneten Spiegeleinrichtungen kann erfindungsgemäß deren relative Anordnung verändert werden. Hierbei können die Spiegeleinrichtungen z.B. relativ zueinander verkippt werden.

Die Veränderung der Stellung der Spiegeleinrichtung oder der Spiegeleinrichtungen erfolgt vorzugsweise periodisch.

Durch die Spiegelbewegungen kann insbesondere bei Verwendung mehrerer hintereinander angeordneter Spiegeleinrichtungen eine Art dreidimensionaler Effekt im ROI erzeugt werden, indem z.B. die ROI in mehreren parallelen Abtastzeilen abgetastet wird. Es lässt sich hierdurch eine Quasi-3D-Objekterkennung in bestimmten Regionen der Fahrzeugumgebung realisieren.

In einer bevorzugten Ausführungsform der Erfindung ist vorgesehen, dass die Stellung der Spiegeleinrichtung situationsabhängig verändert wird. Hierdurch kann eine Rückkopplung mit der vom Sensor "gesehenen" Fahrzeugumgebung erzielt werden, d.h. es kann auf Veränderungen in der Fahrzeugumgebung reagiert werden. Die Veränderung der Spiegelstellung erfolgt vorzugsweise automatisch.

In einer weiteren bevorzugten Ausgestaltung der Erfindung ist vorgesehen, dass die Region von besonderem Interesse in Abhängigkeit von durch die Abtastung gewonnenen Informationen durch Verstellen der Spiegeleinrichtung verschoben wird. Hierdurch kann die ROI z.B. einem bei der Abtastung erfassten Objekt nachgeführt werden, wodurch der Sensor ein einmal erfasstes Objekt wie z.B. eine Person am Straßenrand gewissermaßen "im Auge behalten" kann.

Eine weitere bevorzugte Ausgestaltung der Erfindung schlägt vor, dass in Abhängigkeit von durch die Abtastung insbesondere der Region von besonderem Interesse gewonnenen Informationen zumindest ein Steuersignal zur Ansteuerung einer Fahrzeugeinrichtung erzeugt wird.

Bei der ansteuerbaren Fahrzeugeinrichtung kann es sich um die Spiegeleinrichtung selbst handeln. Es ist jedoch auch möglich, beispielsweise die Scheinwerfer des Fahrzeugs anzusteuern, um z.B. nach Identifizierung einer bestimmten Situation wie beispielsweise das Passieren eines Baustellenbereichs, das Vorhandensein einer Straßeneinmündung oder das Auftauchen einer Person am Straßenrand, die Fahrzeugscheinwerfer zu aktivieren, zu deaktivieren oder entsprechend der jeweiligen Situation zu bewegen, um z.B. einen bestimmten Bereich der Fahrzeugumgebung besser auszuleuchten. Außerdem können in derartigen oder anderen Situationen der Fahrer oder die am Fahrbahnrand befindliche Person automatisch gewarnt werden, indem z.B, eine Anzeigeeinrichtung am Armaturenbrett oder die Fahrzeughupe aktiviert wird.

Gemäß einer weiteren Ausführungsform der Erfindung ist vorgesehen, dass über die Spiegeleinrichtung der Boden bevorzugt in Fahrtrichtung vor dem Fahrzeug abgetastet wird. Vorzugsweise erfolgt diese Bodenüberwachung bei relativ niedrigen Geschwindigkeiten des Fahrzeugs. Hierdurch kann das vor dem Fahrzeug liegende Gelände beispielsweise auf das Auftreten von Hindernissen wie z.B. Kantsteinen, von Markierungen wie z.B. Fahrbahnbegrenzungen, oder von ein vorgegebenes Maß übersteigenden Änderungen der Steigung und/oder des Gefälles überwacht werden. Insbesondere kann die momentane Steigung bzw. das momentane Gefälle berechnet und rechtzeitig vor Erreichen eines vorgegebenen Schwellenwertes z.B. ein Warnsignal abgegeben werden.

Ferner kann erfindungsgemäß vorgesehen sein, dass mittels der Spiegeleinrichtung die Abtastfrequenz zumindest bezüglich eines Teils des Sichtfeldes des Sensors erhöht wird. Die Erhöhung der Abtastfrequenz erfolgt vorzugsweise bei relativ hohen Geschwindigkeiten und kann z.B. während eines Beschleunigungsvorgangs bei Erreichen einer vorgegebenen Geschwindigkeit automatisch aktiviert werden.

In einer weiteren Ausführungsform der Erfindung kann vorgesehen sein, dass im gesamten Sichtfeld des Sensors eine Abtastung in mehreren Abtastebenen durchgeführt wird. Die erfindungsgemäße zusätzliche Abtastung der ROI mittels der Spiegeleinrichtung erfolgt hierbei bereits ausgehend von einer z.B. einen Quasi-3D-Effekt ermöglichenden Mehrebenenabtastung des gesamten Sensorsichtfeldes.

Die Lösung der der Erfindung zugrundeliegenden Aufgabe erfolgt erfindungsgemäß außerdem durch die Merkmale des unabhängigen Vorrichtungsanspruchs 15.

Bezüglich bevorzugter Ausgestaltungen der erfindungsgemäßen Erfassungsvorrichtung wird auch auf die vorstehenden Ausführungen verwiesen.

In einem Ausführungsbeispiel der Erfassungsvorrichtuilg ist die Spiegeleinrichtung an einem Randbereich des Sichtfeldes des Sensors angeordnet. Vorzugsweise sind zwei jeweils an einem Randbereich angeordnete Spiegeleinrichtungen vorgesehen.

Als optoelektronische Sende-/Empfangseinrichtung bzw. optoelektronischer Sensor kann beispielsweise ein Laserscanner vorgesehen sein, der ein etwa 270° umfassendes Sichtfeld aufweist, in welchem eine Abtastung der Fahrzeugumgebung in einer oder mehreren Abtastebenen erfolgt. An den beiden Endbereichen dieses Sichtfeldes angeordnete Spiegeleinrichtungen können beispielsweise derart angeordnet und ausgebildet sein, dass sie jeweils einen Winkelbereich von etwa 45° des Sichtfeldes abdecken. Zwischen den beiden Spiegeleinrichtungen verbleibt somit ein "normaler" oder "direkter" Überwachungsbereich oder Erfassungsbereich von etwa 180°, der für bestimmte Anwendungen ausreichend ist. Im Fall eines im vorderen Bereich des Fahrzeugs angeordneten Sensors beispielsweise kann somit der vor dem Fahrzeug liegende Halbraum direkt abgetastet werden, während mit den seitlichen, jeweils etwa 45° abdeckenden "Abtastohren" zusätzliche Erfassungs- oder Überwachungsbereiche geschaffen werden, mit denen Regionen von besonderem Interesse abgetastet werden können.

Die Erfindung ermöglicht so die Nutzung eines oder mehrerer Bereiche des Sichtfeldes der Sende-/Empfangseinrichtung, die für eine normale Umgebungserfassung oder -überwachung nicht unbedingt benötigt werden, als Regionen für besondere Erfassungs- oder Überwachungszwecke.

Gemäß einer weiteren bevorzugten Ausführungsform der Erfindung ist eine Steuer- und Auswerteeinheit zur Auswertung von durch die Abtastung gewonnenen Informationen und zur Ansteuerung zumindest einer Fahrzeugeinrichtung in Abhängigkeit von den gewonnenen Informationen vorgesehen. Als Grundlage für die Ansteuerung der Fahrzeugeinrichtung dienen insbesondere durch die Abtastung der ROI gewonnene Informationen.

Bei der ansteuerbaren Fahrzeugeinrichtung kann es sich auch um die Spiegeleinrichtung selbst handeln.

Eine bevorzugte Anwendung der Erfindung ist die Steigungserkennung. Die Spiegeleinrichtung wird dazu eingesetzt, den Untergrund in Fahrtrichtung vor dem mit dem Sensor versehenen Fahrzeug zu betrachten. Dies ermöglicht die Identifizierung des jeweiligen Gefälles, der jeweiligen Steigung, von Fahrbahnbegrenzungen, von Kantsteinen und anderen Bodenmerkmalen. Diese Bodenerfassung oder -überwachung wird vorzugsweise bei geringen Geschwindigkeiten z.B. an Golf-Cars durchgeführt.

Eine weitere Anwendung der Erfindung ist die Vervielfachung der Abtastfrequenz in der "Region Of Interest". Hierdurch kann eine besonders sichere Objekterkennung und Objektverifizierung in gefährdeten Zonen und/oder in gefährlichen Situationen realisiert werden. In Frage kommende Situationen sind beispielsweise eine Erhöhung der Fahrgeschwindigkeit und die Verifizierung eines erkannten Objekts.

In einer weiteren Anwendung kann im ROI ein Quasi-3D-Effekt erzeugt werden, indem beispielsweise durch leichtes Verkippen mehrerer vorgesehener Spiegel deren Relativstellung verändert wird. Auf diese Weise können z.B. im ROI mehrere Teil-Abtastzeilen untereinander erzeugt werden. Diese dreidimensionale Objekterkennung ist insbesondere in Verbindung mit gefährdeten Zonen und gefährlichen Situationen von Vorteil.

Ferner kann erfindungsgemäß nicht nur eine statische, sondern auch eine dynamische Anordnung der Spiegeleinrichtungen erreicht werden. Eine dynamische Spiegelanordnung ermöglicht es, den Sichtbereich der Spiegel, also die jeweilige ROI, in Echtzeit und angepasst an die jeweilige Fahrsituation auszurichten und die ROI auch zu verschieben. Es wird so eine situationsadaptive Umgebungsabtastung ermöglicht, die nicht zuletzt unter Sicherheitsaspekten von besonderer Bedeutung ist.

Ferner können aus einer Abtastebene gewonnene Informationen über die ROI durch entsprechende Ausrichtung der Spiegeleinrichtung(en) für eine Mehrfachabtastung verwendet werden, um in einem oder mehreren Abtastschritten mehr bzw. genauere Informationen über die Objektsituation bzw. Umgebungssituation in der ROI zu erhalten.

Des weiteren können mit der Erfindung nach Erkennen und Verifizieren von kritischen Situationen oder kritischen Verkehrsbereichen in der Umgebung des Fahrzeugs, wie z.B. Baustellen, Einmündungen und Personen am Fahrbahnrand, die Fahrzeugscheinwerfer angesteuert, der Fahrer alarmiert, Personen am Fahrbahnrand gewarnt oder andere Vorgänge ausgelöst werden.

Alle vorstehend erwähnten, einander nicht widersprechenden Varianten sowohl des erfindungsgemäßen Erfassungsverfahrens als auch der erfindungsgemäßen Erfassungsvorrichtung können in grundsätzlich beliebiger Art und Weise miteinander kombiniert werden, um eine für den jeweiligen Anwendungszweck optimal angepasste Erfassung oder Überwachung der Fahrzeugumgebung zu erzielen.

## Patentansprüche

1. Verfahren zur optischen Erfassung der Umgebung eines Fahrzeugs mit wenigstens einer am Fahrzeug angebrachten optoelektronischen Sende-/Empfangseinrichtung, bei dem
- ein im Sichtfeld der Sende-/Empfangseinrichtung liegender Überwachungsbereich abgetastet wird, und
- mittels wenigstens einer im Sichtfeld der Sende-/Empfangseinrichtung, aber außerhalb des Überwachungsbereiches angeordneten Strahlungsablenkeinrichtung zusätzlich zu dem Überwachungsbereich eine Region von besonderem Interesse abgetastet wird, **dadurch gekennzeichnet, dass** die Stellung der Ablenkeinrichtung durch eine steverung, verändert wird.

2. Verfahren nach Anspruch 1,
**dadurch gekennzeichnet,**
**dass** als optoelektronische Sende-/Empfangseinrichtung ein Laserscanner verwendet wird, insbesondere ein Entfernungen und Winkel messender Laserscanner, der in zumindest einer Abtastebene zu jedem Entfernungswert einen auf eine vorgegebene Achse bezogenen Winkelwert liefert.

3. Verfahren nach Anspruch 1 oder 2,
**dadurch gekennzeichnet,**
**dass** als Region von besonderem Interesse ein außerhalb des Überwachungsbereiches gelegener Bereich gewählt wird.

4. Verfahren nach Anspruch 1 oder 2,
**dadurch gekennzeichnet,**
**dass** als Region von besonderem Interesse zumindest ein Teil des Überwachungsbereiches gewählt wird.

5. Verfahren nach einem der vorhergehenden Ansprüche,
**dadurch gekennzeichnet,**
**dass** bei einer Abtastung des Sichtfeldes der Sende-/Empfangseinrichtung zumindest ein Teil des Sichtfeldes, insbesondere des Überwachungsbereiches, über die Ablenkeinrichtung mehrfach abgetastet wird, bevorzugt aus unterschiedlichen Richtungen.

6. Verfahren nach einem der vorhergehenden Ansprüche,
**dadurch gekennzeichnet,**
**dass** bei einer Abtastung des Sichtfeldes der Sende-/Empfangseinrichtung zumindest ein Teil des Sichtfeldes, insbesondere des Überwachungsbereiches, über die Ablenkeinrichtung in mehreren verschiedenen Abtastebenen abgetastet wird, bevorzugt aus unterschiedlichen Richtungen.

7. Verfahren nach einem der vorhergehenden Ansprüche,
**dadurch gekennzeichnet,**
**dass** mehrere hintereinander angeordnete Ablenkeinrichtungen verwendet werden.

8. Verfahren nach einem der vorhergehenden Ansprüche,
**dadurch gekennzeichnet,**
**dass** die relative Anordnung mehrerer hintereinander angeordneter Ablenkeinrichtungen verändert wird, insbesondere durch Verkippen wenigstens einer Ablenkeinrichtung.

9. Verfahren nach einem der vorhergehenden Ansprüche,
**dadurch gekennzeichnet,**
**dass** die Stellung der Ablenkeinrichtung situationsabhängig insbesondere automatisch verändert wird.

10. Verfahren nach einem der vorhergehenden Ansprüche,
**dadurch gekennzeichnet,**
**dass** die Region von besonderem Interesse in Abhängigkeit von durch die Abtastung gewonnenen Informationen durch Verstellen der Ablenkeinrichtung verschoben wird.

11. Verfahren nach einem der vorhergehenden Ansprüche,
**dadurch gekennzeichnet,**
**dass** in Abhängigkeit von durch die Abtastung insbesondere der Region von besonderem Interesse gewonnenen Informationen wenigstens ein Steuersignal zur Ansteuerung einer Fahrzeugeinrichtung erzeugt wird.

12. Verfahren nach einem der vorhergehenden Ansprüche,
**dadurch gekennzeichnet,**
**dass** insbesondere bei relativ niedrigen Geschwindigkeiten des Fahrzeugs über die Ablenkeinrichtung der Boden bevorzugt in Fahrtrichtung vor dem Fahrzeug abgetastet wird.

13. Verfahren nach einem der vorhergehenden Ansprüche,
**dadurch gekennzeichnet,**
**dass** insbesondere bei relativ hohen Geschwindigkeiten des Fahrzeugs mittels der Ablenkeinrichtung die Abtastfrequenz zumindest bezüglich eines Teils des Sichtfeldes der Sende-/Empfangseinrichtung erhöht wird.

14. Verfahren nach einem der vorhergehenden Ansprüche,
**dadurch gekennzeichnet,**
**dass** im gesamten Sichtfeld der Sende-/Empfangseinrichtung eine Abtastung in mehreren Abtastebenen durchgeführt wird.

15. Vorrichtung zur optischen Erfassung der Umgebung eines Fahrzeugs, insbesondere zur Durchführung des Verfahrens nach einem der Ansprüche 1 bis 14, mit wenigstens einer im Betrieb am Fahrzeug angebrachten optoelektronischen Sende-/Empfangseinrichtung, mittels welcher ein im Sichtfeld der Sende-/Empfangseinrichtung liegender Überwachungsbereich abtastbar ist, und mit zumindest einer im Sichtfeld der Sende-/Empfangseinrichtung, aber außerhalb des Überwachungsbereiches angeordneten Strahlungsablenkeinrichtung, mittels welcher zusätzlich zu dem Überwachungsbereich eine Region von besonderem Interesse abtastbar ist, **dadurch gekennzeichnet, dass** die Stellung der Ablenkemnchtung steuerbar ist.

16. Vorrichtung nach Anspruch 15,
**dadurch gekennzeichnet,**
**dass** die optoelektronische Sende-/Empfangseinrichtung als Laserscanner ausgebildet ist, insbesondere als Entfernungen und Winkel messender Laserscanner, der in zumindest einer Abtastebene zu jedem Entfernungswert einen auf eine vorgegebene Achse bezogenen Winkelwert liefert.

17. Vorrichtung nach Anspruch 15 oder 16,
**dadurch gekennzeichnet,**
**dass** mehrere Ablenkeinrichtungen hintereinander angeordnet sind.

18. Vorrichtung nach einem der Ansprüche 15 bis 17,
**dadurch gekennzeichnet,**
**dass** die relative Anordnung mehrerer hintereinander angeordneter Ablenkeinrichtungen veränderbar ist, insbesondere durch Verkippen wenigstens einer Ablenkeinrichtung.

19. Vorrichtung nach einem der Ansprüche 15 bis 18,
**dadurch gekennzeichnet,**
**dass** die Stellung der Ablenkeinrichtung situationsabhängig insbesondere automatisch veränderbar ist.

20. Vorrichtung nach einem der Ansprüche 15 bis 19,
**dadurch gekennzeichnet,**
**dass** die Ablenkeinrichtung an einem Randbereich des Sichtfeldes der Sende-/Empfangseinrichtung angeordnet ist, wobei bevorzugt zwei jeweils an einem Randbereich angeordnete Ablenkeinrichtungen vorgesehen sind.

21. Vorrichtung nach einem der Ansprüche 15 bis 20,
**dadurch gekennzeichnet,**
**dass** eine Steuer- und Auswerteeinheit zur Auswertung von durch die Abtastung gewonnenen Informationen und zur Ansteuerung zumindest einer Fahrzeugeinrichtung in Abhängigkeit von den gewonnenen Informationen vorgesehen ist.

22. Vorrichtung nach einem der Ansprüche 15 bis 21,
**dadurch gekennzeichnet,**
**dass** als eine ansteuerbare Fahrzeugeinrichtung die Ablenkeinrichtung vorgesehen ist.

## Claims

1. A method for the optical detection of the environment of a vehicle comprising at least one optoelectronic transmitter/ receiver attached to the vehicle, in which
- a monitored zone disposed in the field of view of the transmitter/receiver is scanned, and
- a region of particular interest is scanned in addition to the monitored zone by means of at least one radiation deflection device arranged in the field of view of the transmitter/ receiver, but outside the monitored zone,
**characterized in that**
the position of the deflection device is changed by a control.

2. A method in accordance with claim 1, **characterized in that** a laser scanner is used as the optoelectronic transmitter/ receiver, in particular a laser scanner which measures distances and angles and which provides an angular value related to a pre-determined axis for each distance value in at least one scanning plane.

3. A method in accordance with claim 1 or claim 2, **characterized in that** a region disposed outside the monitored zone is selected as the region of particular interest.

4. A method in accordance with claim 1 or claim 2, **characterized in that** at least a part of the monitored zone is selected as the region of particular interest.

5. A method in accordance with any one of the preceding claims, **characterized in that**, when scanning the field of view of the transmitter/ receiver, at least a part of the field of view, in particular of the monitored zone, is scanned a plurality of times via the deflection device, preferably from different directions.

6. A method in accordance with any one of the preceding claims, **characterized in that**, when scanning the field of view of the transmitter/receiver, at least a part of the field of view, in particular of the monitored zone, is scanned in a plurality of different scanning planes via the deflection device, preferably from different directions.

7. A method in accordance with any one of the preceding claims, **characterized in that** a plurality of deflection devices arranged sequentially are used.

8. A method in accordance with any one of the preceding claims, **characterized in that** the relative arrangement of a plurality of deflection devices arranged sequentially is changed, in particular by tilting at least one deflection device.

9. A method in accordance with any one of the preceding claims, **characterized in that** the position of the deflection device is changed, in particular automatically, in dependence on the situation.

10. A method in accordance with any one of the preceding claims, **characterized in that** the region of particular interest is displaced in dependence on information acquired by the scan by adjusting the deflection device.

11. A method in accordance with any one of the preceding claims, **characterized in that** at least one control signal is produced for the control of a vehicle device in dependence on information acquired by the scanning in particular of the region of particular interest.

12. A method in accordance with any one of the preceding claims, **characterized in that**, in particular at relatively low speeds of the vehicle, the ground is preferably scanned via the deflection device in the direction of travel in front of the vehicle.

13. A method in accordance with any one of the preceding claims, **characterized in that**, in particular at relatively high speeds of the vehicle, the scanning frequency is increased by means of the deflection device at least with respect to a part of the field of view of the transmitter/ receiver.

14. A method in accordance with any one of the preceding claims, **characterized in that** a scan is carried out in a plurality of scanning planes in the total field of view of the transmitter/receiver.

15. An apparatus for the optical detection of the environment of a vehicle, in particular for the carrying out of the method in accordance with any one of claims 1 to 14, having at least one optoelectronic transmitter/ receiver attached to the vehicle in operation by means of which a monitored zone disposed in the field of view of the transmitter/receiver can be scanned, and having at least one radiation deflection device which is arranged in the field of view of the transmitter/receiver, but outside the monitored zone, and by means of which a region of particular interest can be scanned in addition to the monitored zone,
**characterized in that** the position of the deflection device can be controlled.

16. An apparatus in accordance with claim 15, **characterized in that** the optoelectronic transmitter/receiver is made as a laser scanner, in particular as a laser scanner which measures distances and angles and which provides an angular value relative to a pre-determined axis for each distance value in at least one scanning plane.

17. An apparatus in accordance with claim 15 or claim 16, **characterized in that** a plurality of deflection devices are arranged sequentially.

18. An apparatus in accordance with any one of claims 15 to 17, **characterized in that** the relative arrangement of a plurality of deflection devices arranged sequentially can be changed, in particular by tilting at least one deflection device.

19. An apparatus in accordance with any one of claims 15 to 18, **characterized in that** the position of the deflection device can be changed, in particular automatically, in dependence on the situation.

20. An apparatus in accordance with any one of claims 15 to 19, **characterized in that** the deflection device is arranged at a marginal region of the field of view of the transmitter/receiver, with two deflection devices preferably being provided, each arranged at a marginal region.

21. An apparatus in accordance with any one of claims 15 to 20, **characterized in that** a control and evaluation unit is provided for the evaluation of information acquired by the scan and for the control of at least one vehicle device in dependence on the acquired information.

22. An apparatus in accordance with any one of claims 15 to 21, **characterized in that** the deflection device is provided as a controllable vehicle device.

## Revendications

1. Procédé de détection optique de l'environnement d'un véhicule, comportant au moins un dispositif émetteur/récepteur optoélectronique monté sur le véhicule, dans lequel
- on balaye une zone de surveillance se trouvant dans le champ visuel du dispositif émetteur/récepteur, et
- on balaye, en plus de la zone de surveillance, une région d'intérêt particulier au moyen d'au moins un dispositif de déviation de rayonnement, agencé dans le champ visuel du dispositif émetteur/récepteur, mais à l'extérieur de la zone de surveillance,
**caractérisé en ce que** la position du dispositif de déviation est modifiée par une commande.

2. Procédé selon la revendication 1,
**caractérisé en ce que**
l'on utilise à titre de dispositif émetteur/récepteur optoélectronique un scanner laser, en particulier un scanner laser mesurant les distances et les angles, lequel fournit dans au moins un plan de balayage et pour chaque valeur de distance une valeur angulaire se référant à un axe prédéterminé.

3. Procédé selon la revendication 1 ou 2,
**caractérisé en ce que**
l'on choisit à titre de région d'intérêt particulier une zone située en dehors de la zone de surveillance.

4. Procédé selon la revendication 1 ou 2,
**caractérisé en ce que**
l'on choisit à titre de région d'intérêt particulier au moins une partie de la zone de surveillance.

5. Procédé selon l'une quelconque des revendications précédentes,
**caractérisé en ce que**
lors d'un balayage du champ visuel du dispositif émetteur/récepteur, on balaye à plusieurs reprises au moins une partie du champ visuel, en particulier de la zone de surveillance, via le dispositif de déviation, de préférence depuis différentes directions.

6. Procédé selon l'une quelconque des revendications précédentes,
**caractérisé en ce que**
lors d'un balayage du champ visuel du dispositif émetteur/récepteur, on balaye dans plusieurs plans de balayage au moins une partie du champ visuel, en particulier de la zone de surveillance, via le dispositif de déviation, de préférence depuis différentes directions.

7. Procédé selon l'une quelconque des revendications précédentes,
**caractérisé en ce que**
l'on utilise plusieurs dispositifs de déviation agencés les uns derrière les autres.

8. Procédé selon l'une quelconque des revendications précédentes,
**caractérisé en ce que**
l'on modifie l'agencement relatif de plusieurs dispositifs de déviation agencés les uns derrière les autres, en particulier en faisant basculer au moins un dispositif de déviation.

9. Procédé selon l'une quelconque des revendications précédentes,
**caractérisé en ce que**
l'on modifie en particulier automatiquement la position du dispositif de déviation en fonction de la situation.

10. Procédé selon l'une quelconque des revendications précédentes,
**caractérisé en ce que**
l'on déplace la région d'intérêt particulier en fonction des informations obtenues par le balayage en réglant le dispositif de déviation.

11. Procédé selon l'une quelconque des revendications précédentes,
**caractérisé en ce que**
l'on engendre au moins un signal de commande pour piloter un dispositif dans le véhicule en fonction d'informations obtenues, en particulier de la région d'intérêt particulier.

12. Procédé selon l'une quelconque des revendications précédentes,
**caractérisé en ce que**
l'on balaye le sol en particulier à des vitesses relativement faibles du véhicule via le dispositif de déviation, de préférence en direction de la circulation devant le véhicule.

13. Procédé selon l'une quelconque des revendications précédentes,
**caractérisé en ce que**
l'on augmente la fréquence de balayage en particulier à des vitesses relativement faibles du véhicule au moyen du dispositif de déviation, au moins par rapport à une partie du champ visuel du dispositif émetteur/récepteur.

14. Procédé selon l'une quelconque des revendications précédentes,
**caractérisé en ce que**
l'on effectue un balayage dans plusieurs plans de balayage dans tout le champ visuel du dispositif émetteur/récepteur.

15. Dispositif de détection optique de l'environnement d'un véhicule, en particulier pour exécuter le procédé selon l'une des revendications 1 à 14, comportant au moins un dispositif émetteur/récepteur optoélectronique monté en fonctionnement sur le véhicule, au moyen duquel on peut balayer une zone de surveillance se trouvant dans le champ visuel du dispositif émetteur/récepteur, et comportant au moins un dispositif de déviation de rayonnement, agencé dans le champ visuel du dispositif émetteur/récepteur, mais à l'extérieur de la zone de surveillance, au moyen duquel on peut balayer, en plus de la zone de surveillance, une région d'intérêt particulier
**caractérisé en ce que** la position du dispositif de déviation peut être commandée.

16. Dispositif selon la revendication 15,
**caractérisé en ce que**
le dispositif émetteur/récepteur optoélectronique est réalisé sous forme de scanner laser, en particulier de scanner laser mesurant les distances et les angles, lequel fournit dans au moins un plan de balayage et pour chaque valeur de distance une valeur angulaire se référant à un axe prédéterminé.

17. Dispositif selon la revendication 15 ou 16,
**caractérisé en ce que**
plusieurs dispositifs de déviation sont agencés les uns derrière les autres.

18. Dispositif selon l'une des revendications 15 à 17,
**caractérisé en ce que**
l'agencement relatif de plusieurs dispositifs de déviation agencés les uns derrière les autres peut être modifié, en particulier en faisant basculer au moins un dispositif de déviation.

19. Dispositif selon l'une des revendications 15 à 18,
**caractérisé en ce que**
la position du dispositif de déviation peut être modifiée en particulier automatiquement en fonction de la situation.

20. Dispositif selon l'une des revendications 15 à 19,
**caractérisé en ce que**
le dispositif de déviation est agencé sur une région de bord du champ visuel du dispositif émetteur/récepteur, et de préférence, il est prévu deux dispositifs de déviation agencés sur chaque région de bord.

21. Dispositif selon l'une des revendications 15 à 20,
**caractérisé en ce que**
il est prévu une unité de commande et d'évaluation pour évaluer des informations obtenues par le balayage et pour piloter au moins un dispositif dans le véhicule en fonction des informations obtenues.

22. Dispositif selon l'une des revendications 15 à 21,
**caractérisé en ce que**
le dispositif de déviation est prévu à titre de dispositif pilotable dans le véhicule.
